# EUROPÄISCHE PATENTSCHRIFT

(11) **EP 1 981 621 B1**
(45) Veröffentlichungstag und Bekanntmachung des Hinweises auf die Patenterteilung: **31.03.2010**
(21) Anmeldenummer: 07703070.8
(22) Anmeldetag: 26.01.2007
(51) Int. Cl.: B01F 3/02, B01F 5/04, B01F 15/00, B01D 53/34, B01D 53/76, F23J 15/00, B01F 5/02, B01F 5/06

(54) **VERFAHREN UND VORRICHTUNG ZUM VERMISCHEN EINES GASFÖRMIGEN FLUIDS MIT EINEM GROSSEN GASMENGENSTROM, INSBESONDERE ZUM EINBRINGEN EINES REDUKTIONSMITTELS IN EIN STICKOXIDE ENTHALTENDES RAUCHGAS**
METHOD AND DEVICE FOR MIXING A GASEOUS FLUID WITH A LARGE GAS FLOW, ESPECIALLY TO INTRODUCE A REDUCING AGENT INTO A FLUE GAS CONTAINING NITROGEN OXIDES
PROCÉDÉ ET DISPOSITIF POUR MÉLANGER UN FLUIDE GAZEUX AVEC UN IMPORTANT FLUX MASSIQUE DE GAZ, EN PARTICULIER POUR INTRODUIRE UN AGENT DE RÉDUCTION DANS UN GAZ DE FUMÉE CONTENANT DES OXYDES D'AZOTE

(30) Priorität: 28.01.2006 DE 102006004069
(43) Veröffentlichungstag der Anmeldung: 22.10.2008
(73) Patentinhaber: FISIA Babcock Environment GmbH, 51643 Gummersbach (DE)
(72) Erfinder: BECKMANN, Gerd, 51653 Gummersbach (DE); ENGELKING, Wolfram, 51674 Wiehl (DE); PRIESMEIER, Ulrich, 51643 Gummersbach (DE)
(74) Vertreter: Carstens, Wilhelm
(86) Internationale Anmeldenummer: PCT/EP2007/000688
(87) Internationale Veröffentlichungsnummer: WO 2007/085471

(56) Entgegenhaltungen:
- EP-A- 0 956 895
- EP-A- 1 568 410
- EP-A1- 1 166 861
- EP-B1- 1 107 821
- US-A1- 2005 189 026

## Beschreibung

Die Erfindung betrifft ein Verfahren zum Vermischen mindestens eines gasförmigen Fluidstroms mit einem großen Gasmengenstrom, insbesondere zum Einbringen eines Reduktionsmittels in ein Stickoxide enthaltendes Rauchgas, bei dem der große Gasmengenstrom mindestens ein unter einem Winkel gegen seine Strömungsrichtung geneigt angeordnetes scheibenartig ausgebildetes Mischerelement auf seiner Anströmseite (Luv - Seite) anströmt, an dem sich Strömungswirbel ausbilden, bei dem der Fluidstrom im wesentlichen auf die Mitte einer der Abströmseite (Lee - Seite) des Mischerelements zugeordneten und zum Mischerelement parallelen Prallfläche gelenkt wird und bei dem der gasförmige Fluidstrom dem Gasmengenstrom stromab des Mischerelements zugemischt wird.

Aus der EP 1 604 742 A1 ist ein Verfahren im Zusammenhang mit Elektrofiltern zur Entstaubung großer Gasmengenströme bekannt, bei dem die sich an der geneigten Mischerscheibe ausbildenden Strömungswirbel als Vorderkantenwirbel bezeichnet werden. Die gegen den großen Gasmengenstrom gerichtete Kante der vorzugsweise kreisförmigen Scheibe ist als Anströmkante und die andere Kante als Abrißkante bezeichnet. Es handelt sich dabei nicht um geradlinige Kanten, sondern um bogenförmige Kanten.

Die vertikale Wandung des den großen Gasmengenstrom führenden Gaskanals ist von einem Rohrstutzen für die Zumischung eines Konditionierfluids senkrecht durchsetzt. Der Rohrstutzen mündet in Strömungsrichtung des großen Gasmengenstroms gesehen hinter der Anströmkante der Mischerscheibe ohne die Mischerscheibe zu überlappen. Der aus dem Rohrstutzen austretende Konditioniermittelstrom trifft auf die dem Stutzenaustritt benachbarte randständige Teilflache der Abströmseite der Mischerscheibe unter einem Winkel auf, der dem Neigungswinkel der Scheibe zu Strömungsrichtung des großen Gasmengenstroms entspricht. In Sp.6, Z.5-6 der EP 1 604 742 A1 werden auch Verfahrensweisen für zweckmäßig gehalten, bei denen die Zumischeinrichtung unmittelbar an der Wirbelvorrichtung angebracht ist.

Aus der EP 1 568 410 A1 ist ein gattungsgemäßes Verfahren zum Vermischen zweier Fluidströme im Zusammenhang mit Anlagen zur Entstickung von Rauchgases bekannt, bei dem das aus dem Rohrstutzen austretende Reduktionsmittel trifft auf Rückseite der schräg gestellten Mischerscheibe (Lee - Seite) nahe ihrer Zentralregion unter einem Winkel auf, der dem Neigungswinkel der Scheibe zur Strömungsrichtung des großen Gasmengenstroms entspricht. Nach Sp.2, Z. 17 - 20 sollte der der Rohrstutzen nur über eine kurze Distanz nach Innen über die Wand des den großen Gasmengenstrom (Rauchgas) führenden Kanal vorragen. Wegen der Schrägstellung des Stützen relativ zur Mischerelement erfolgt keine gleichmäßige Verteilung des gasförmigen Fluids über die gesamte Abströmseite (Lee - Seite) und das gasförmige Fluid wird nicht über die gesamte umlaufende Kante des . Mischerelements in den Rauchgasstrom eingemischt, sondern im wesentlichen nur über den in Fig.1 EP 1 568 410 A1 der oben liegenden Kantenabschnitt.

Bei diesen Verfahrensführungen erfolgt somit keine optimale Verteilung des Konditionier- bzw. Reduktionsmittels auf der Mischerscheibe und es wird somit keine optimale Einmischung in das an der Mischerscheibe entstehende Wirbel system eingemischt.

Bei der in der EP 1 166 861 A1 in Zusammenhang mit Denox - Anlagen und Elektrofiltern beschriebenen Mischvorrichtung weist die Mischerscheibe (Einbaufläche) eine Kammer auf, in die ein separater Strömungskanal für das einzumischende Gas oder eine andere Newtonsche Flüssigkeit führt und die als Verteilerkammer für den Gasstrom dient. Die Kammer ist auf der der Zuströmung des großen Gasmengenstroms abgewandten Rückseite (Abströmseite; Lee- Seite) der Mischerscheibe mit Austrittsöffnungen versehen und im Bereich der Anströmkante angeordnet. An die Verteilerkammer schließen sich zu Abrißkante hin Kammern an, die jedoch keine Verteilerfunktion oder strömungstechnische Funktion haben, sondern ausschließlich der Versteifung der Mischerscheibe dienen. Die Austrittsöffnungen können im Deckel der Verteilerkammer oder in deren Seitenwandung ausgebildet sein. Sie können aber auch in einer auf die Kammer aufgesetzten zusätzlichen Haube ausgebildet sein. Es ist aber auch möglich, dass die Kammer selbst nicht mit einem zur Mischerscheibe parallelen Deckel ausgerüstet ist, sondern selbst haubenförmig gestaltet ist. Der Strömungskanal für die Zufuhr von Gas kann von der Luv - Seite der Mischerscheibe durch die Scheibe hindurch in die Kammer eintreten oder auf der Lee - Seite der Mischerscheibe zu der Verteilerkammer hingeführt sein. Bei dem in der EP 1 166 861 B1 beschriebenen Verfahren ist eine zusätzliche Kammer erforderlich und die Einmischung erfolgt wiederum nur in der Nähe der Anströmkante.

Solche als Mischverfahren mit einem statischen Mischer bezeichneten Verfahren werden z. B. auch bei SCR-Anlagen zur Entstickung (Selektive Catalytische Reduktion) von Rauchgasen z.B. von Kraftwerksfeuerungen mittels Reduktionsmittel und Katalysator eingesetzt. Dabei ist es üblich, dass im Fall von NH3 als Reduktionsmittel dieses in Form von druckverflüssigtem NH3 oder von Ammoniakwasser (NH4OH) gelagert und vorverdampftes NH3 mit einem Traggasstrom in den Rauchgasstrom eingedüst und mit diesem vermischt wird. Im Fall von Harnstoff als Reduktionsmittel wird zunächst eine wässrige Harnstofflösung erzeugt, die nach geeigneter Aufarbeitung dann ebenfalls gasförmig in den Rauchgasstrom eingedüst wird.

Weiterhin werden sie beispielsweise eingesetzt bei der Beaufschlagung von Industrieschornsteinen, von Sprühtrocknern (vgl. z.B.EP 0637 726 B1), von Wärmetauschern, von Raugasentschwefelungsanlagen und von Hybridkühltürmen.

Es ist die Aufgabe der Erfindung, beim gattungsgemäßen Verfahren die Einmischung des gasförmigen Fluidstroms in den großen Gasmengenstrom zu verbessern.

Diese Aufgabe wird dadurch gelöst, dass der Fluidstrom im wesentlichen senkrecht auf die Mitte der Prallfläche auf der Abströmseite gelenkt wird, wobei das gasförmige Fluid von der Mitte her über die gesamte Abströmseite des Mischerelements verteilt wird und über das gesamte sich an der umlaufenden Kante des Mischerelements ausbildende Wirbelsystem eingetragen wird.

Der gasförmige Fluidstrom aus einem Zuführungsrohr trifft als Prallstrahl trifft senkrecht auf die Mitte der Prallfläche und erzeugt dort einen Staupunkt mit statischem Überdruck, von dem ausgehend sich das Strömungsmedium, im wesentlichen parallel zur Prallfläche radial ausbreitet. Damit entsteht ein rotationssymmetrischer Flachstrahl, der sich auf der Lee -Seite des Mischerelements parallel zur Scheibenoberfläche bis zum Rand des Mischerelements ausbreitet und in die von der im großen Gasmengenstrom geneigt angestellten Mischerscheibe ausgebildeten schleppenartigen Strömungswirbel eintritt.

Hierdurch wird erreicht, dass das gasförmige Fluid über die gesamte Abströmseite des Mischerelements verteilt wird und in das gesamte sich an der umlaufenden Kante der Scheibe ausbildende Wirbelsystem eingetragen wird.

Die Mitte befindet sich im Falle der Kreisscheibe im Kreismittelpunkt bzw. bei einem regelmäßigen Vieleck im Flächenschwerpunkt. Bei einem Mischerelement mit Abweichungen von der regelmäßigen Form wie z.B. ungleichschenkliges Dreieck, Trapez oder ähnlichem ist eine Anpassung der Austrittsposition (Düsenposition) erforderlich um trotzdem eine weitgehend gleichmäßige Verteilung des gasförmigen Fluids über die Abströmseite des scheibenförmigen Mischerelements zu erreichen.

Vorzugsweise ist vorgesehen, dass der gasförmige Fluidstrom direkt auf die Abströmseite (Lee - Seite) des Mischerelements gelenkt wird, und somit das Mischerelement selbst als Prallfläche dient.

Andererseits kann es zweckmäßig sein, dass der gasförmige Fluidstrom von der Anströmseite (Luv - Seite) her durch eine in dem Mischerelement vorgesehener Öffnung auf eine auf der Abströmsseite (Lee - Seite) vor der Öffnung angeordnete Prallplatte gelenkt wird.

Aus der GB 683 667 ist ein Zerstäuber (sogenannter Air Blast Atomizer) bekannt, bei dem eine Flüssigkeit einschließlich Lösungen, Emulsionen und Suspensionen, mit Hilfe eines Zerstäubungsgasstrom zerstäubt werden sollt. Ein Strahl der zu zerstäubenden Flüssigkeit trifft auf eine sich nicht drehende Scheibe auf. Auf der Scheibe bildet sich ein zum Umfang der Scheibe hin abströmender Film, der in eine Zone eintritt, die gegen über dem Zerstäubungsggasstrom durch eine stromauf der Scheibe und konzentrisch zu ihr angeordnete Baffle geschützt ist, deren Durchmesser 3 bis 7-mal größer sein soll als der der Verteilerscheibe. Außerhalb dieser Zone, d.h. an der umlaufenden Abrißkante des Baffles, wird die zu zerstäubende Flüssigkeit von dem Zerstäubungsgastrom erfaßt und aufgenommen. Es findet sich keinerlei Hinweis auf die Ausbildung eines besonderen Strömungwirbelsystems an dem Baffle oder an der Scheibe. In den Figuren ist gezeigt, dass die Flüssigkeit in die ungestörte laminare Strömung des Zerstäubungsgases eintritt. Das Vwerfahren soll bei dem Zerstäuben biocider Flüssigkeiten, Flüssigbrennstoffen und Flüssigkraftstoffen eingesetzt werden.

Aus dem DE- Gebrauchsmuster 92 07 635.1 ist ein vormischender Gasbrenner bekannt, bei dem eine der Austrittsöffnung einer Gaslanze nachgeschaltete Prallplatte für ein Umlenken und Auffächern des zunächst noch kompakten Gasstroms sorgt. Der aufgefächerte Gasstrom tritt in eine laminare Luftströmung ein.

Aus der DE 198 06 265 C5 ist ein Dosiersystem für die Entstickung des Abgases eines Dieselmotors mit einer vor einem Katalysator in das Abgas eingebrachten Harnstofflösung bekannt, bei der der Austrittsöffnung der Harnstofflösung in den Abgasraum mit Abstand eine Prallvorrichtung zu geordnet ist, die eine Richtungsänderung der in den Abgasraum eingedüsten und noch zu verdampfenden Harnstofflösung bewirkt. Die Achse der Austrittsöffnung schließt einen Winkel von angenähert 45° mit der Hauptströmungsrichtung des Abgases im Abgasraum ein und die Prallvorrichtung steht senkrecht zu dieser Achse, d.h. die Harnstofflösung trifft auf die angeströmte (Luv - Seite) der Prallvorrichtung auf. Auf der angeströmten Seite wird eine bessere Wärmzufuhr für die erforderliche Verdampfung erreicht. Ein zusätzliche Strömungswirbel erzeugendes gesondertes Mischerelement ist nicht vorgesehen.

Aus der JP 08-084909 A ist eine Anordnung zum Entfernen von HCl aus dem Abgas einer kleinen Verbrennungsanlage bekannt, bei der aus einer Vielzahl von Düsen mehrere Strahlen einer Waschflüssigkeit unter verschiedenen Winkeln auf die schirmartig ausgebildete Oberfläche einer in dem zu reinigenden Gasstrom mit vertikaler Achse angeordneten Baffle gerichtet werden. Die über den gesamten Umfang der kreisförmigen Baffle ablaufende Flüssigkeit bildet einen Füssigkeitsvorhang, durch den das zu reinigende Abgas von unten in den Raum oberhalb der Baffle eintritt und aus diesem nach oben abströmt. Es findet sich kein Hinweis darauf, dass in der Anordnung gezielt besondere Strömungswirbel ausgebildet werden.

Die Auswahl zwischen den beiden vorstehend genannten Verfahren hängt zum Beispiel von den Einbaumöglichkeiten vor oder hinter dem scheibenförmigen Mischerelement ab.

Die Erfindung richtet sich auch auf eine Vorrichtung zum Vermischen mindestens eines gasförmigen Fluidstroms mit einem in einem Gaskanal strömenden großen Gasmengenstrom, insbesondere zum Einbringen eines Reduktionsmittels in ein Stickoxide enthaltendes Rauchgas, mit mindestens einem in dem Gaskanal gehaltenen scheibenartig ausgebildeten Mischerelement mit Anströmseite und Abströmseite das gegen die Strömungsrichtung des Gasmengenstroms unter einem Winkel geneigt angeordnet ist und an dem sich schleppenartige Strömungswirbel ausbilden, einer der Mitte der Abströmseite des Mischerelements zugeordneten und zur Mischerscheibe parallelen Prallfläche und mit einer im wesentlichen auf die Mitte der Prallfläche ausgerichteten rohrartigen Zumischeinrichtung für den gasförmigen Fluidstrom, insbesondere zum Einbringen eines Reduktionsmittels in ein Stickoxide enthaltendes Rauchgas.
Bei dieser ist zur Verbesserung des Mischvorgangs vorgesehen, dass die Ausströmrichtung der rohrartigen Zumischeinrichtung im wesentlichen senkrecht auf die Prallfläche ausgerichtet ist.

Dabei ist vorzugsweise vorgesehen, dass der Fluidaustritt der Zumischeinrichtung auf der Abströmseite (Lee - Seite) des Mischerelements angeordnet ist und das Mischerelement selbst als Prallplatte dient oder dass der Fluidaustritt der Zumischeinrichtung eine im wesentlichen mittige Öffnung in dem Mischerelement ist, aus der der Fluidstrom zur Abströmseite hin austritt, und auf der Abströmseite vor der Öffnung in Abstand eine gesonderte Prallplatte angeordnet ist.

Vorzugsweise ist das Mischerelement kreisförmig, elliptisch, oval, parabelförmig, rautenförmig oder dreieckförmig ausgebildet, wie dies aus der DE 37 23 618 C1, Sp.2, Z. 40 - 45 bekannt ist. Eine vieleckige Ausbildung, z. B. 8-eckige , ist auch möglich. Besonders bevorzugt wird die Form eines symmetrisch strukturierten 8-Ecks, weiter bevorzugt regelmäßigen 8-Ecks. Auch ein Vieleck in Form eines Trapezes ist besonders geeignet.

Die Mischerscheibe ist vorzugsweise unter einem Winkel im Bereich zwischen 30° bis 90° zur Strömungsrichtung des Gasmengenstroms geneigt.

Die Erfindung wird nachstehend beispielsweise anhand der Figuren näher erläutert. Es zeigt:
- Fig.1: eine dreidimensionale Darstellung eines sich an einer von einem Gasmengenstrom angeströmten und gegen den Strom unter einem Winkel α geneigten kreisförmigen Scheibe einstellenden Hufeisenwirbels mit Wirbelschleppe,
- Fig.2: eine Seitenansicht quer zur Linie A - A gemäß Fig. 1,
- Fig.3: eine Vorderansicht mit Blick auf die Lee-Seite der Scheibe quer zur Linie B - B in der Darstellung gemäß Fig. 1,
- Fig.4: eine Seitenansicht/Teilschnitt vergleichbar Fig.2 einer ersten Ausführungsform der erfindungsgemäßen Vorrichtung mit 8-eckiger Mischerscheibe, bei der der Fluidstrom auf die Abströmseite (Lee - Seite) der Mischerscheibe gelenkt wird,
- Fig.5: eine perspektivische Darstellung der Vorrichtung nach Fig.4 mit auf der Abströmseite angeordneten Halterungen der Mischerscheibe,
- Fig.6: eine Seitenansicht/ Teilschnitt vergleichbar Fig.4 einer zweiten Ausführungsform der erfindungsgemäßen Vorrichtung, bei der der Fluidstrom von der Anströmseite (Luv - Seite) her durch eine Öffnung in der Mischerplatte zugeführt wird, und
- Fig.7: eine perspektivische Darstellung der Vorrichtung nach Fig.6 mit Blick auf die Abströmseite der Mischerscheibe und die dort über der Öffnung angeordnete Prallplatten.

Bei der Ausbildung von Wirbelschleppen handelt es um ein natürliches Phänomen in dreidimensionalen Strömungen an einem Körper, (vgl. Prandtl, Oswatitsch, Wieghardt : Führer durch die Strömungslehre, 9. Auflage 1990; ISBN 3-528-28209-6, S. 229, Bild 4.41 und zugehörige Beschreibung).

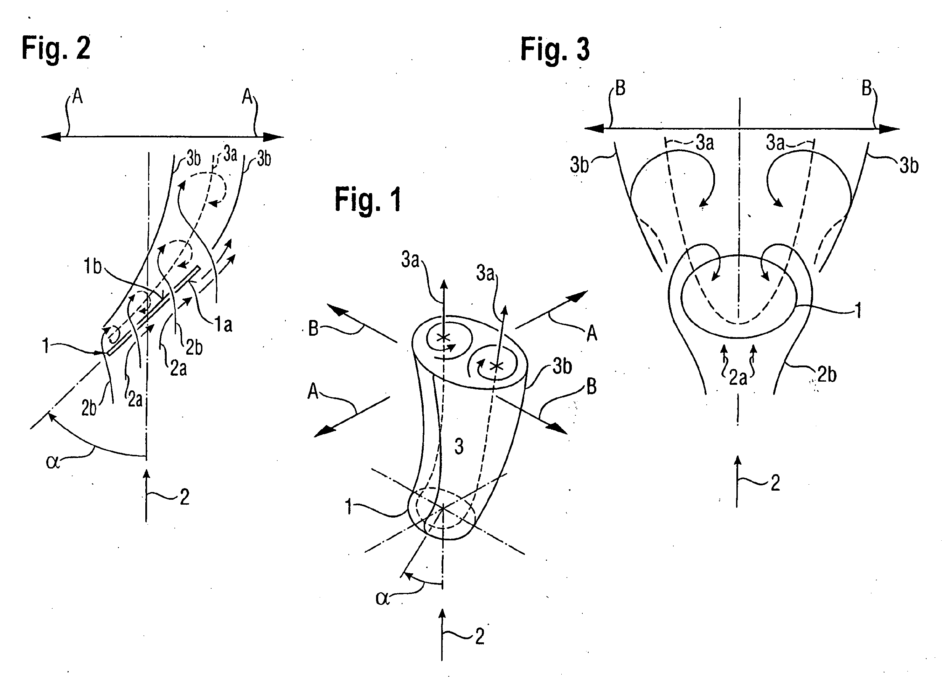

Die Entstehung, die Form und Lage solcher Wirbelschleppen im Abstrom von Mischerscheiben sollen zunächst in den Fig. 1 - 3 schematisch dargestellt und an ihnen beschrieben werden.

Eine kreisförmige Scheibe 1 ist im Winkel α gegen den in der Fig.1 von unten kommenden strömenden Gasmengenstrom 2 geneigt. Auf der Luv-Seite 1a der Scheibe wird der Gasmengenstrom aus seiner Hauptströmungsrichtung abgelenkt und es entsteht ein Überdruckgebiet. Der Teilstrom 2a des Gasmengenstroms 2 strömt mit vorgegebenem Winkel unter der Scheibe entlang. Auf der Lee-Seite 1 b der Scheibe bildet sich ein Unterdruckgebiet, das von dem Teilstrom 2b des Gasmengenstroms über den Rand der Scheibe aufgefüllt wird. Durch die Strömungsumlenkung am Rand der Scheibe bildet sich ein Hufeisenwirbel 3 mit der gestrichelt dargestellten Wirbelachse 3a, der sich in Form einer Wirbelschleppe mit zwei symmetrisch rotierenden Wirbeln stromab der Scheibe fortsetzt. Die seitlichen Wirbel des Hufeisenwirbels setzen sich als Wirbelschleppe fort, überlagern sich mit dem Gasmengenstrom (Grundströmung) und breiten sich mit der Grundströmung aus. Der Strömungszustand innerhalb der Wirbelschleppe ist hoch turbulent. Die schematisch dargestellte Grenze 3b von Hufeisenwirbel und Wirbelschleppe darf nicht als scharfe Abgrenzung verstanden werden. Die Lage und die Struktur sowie die gegenläufigen Drehrichtungen der beiden Wirbel können mit geeigneter Meßtechnik experimentell bestimmt werden.

Bei anderen Scheibenformen wie Ellipsenform, Ovalform, Parabelform, Rautenform, Vielecksform oder Dreiecksform bilden sich vergleichbare Wirbel mit Wirbelschleppen aus. Die turbulente Durchmischung von Wirbelschleppen und Gasmengenstrom wird genutzt, um einen nahezu punktuell eingedüsten Gasstrom gleichmäßig über einen sehr großen Querschnitt zu verteilen.

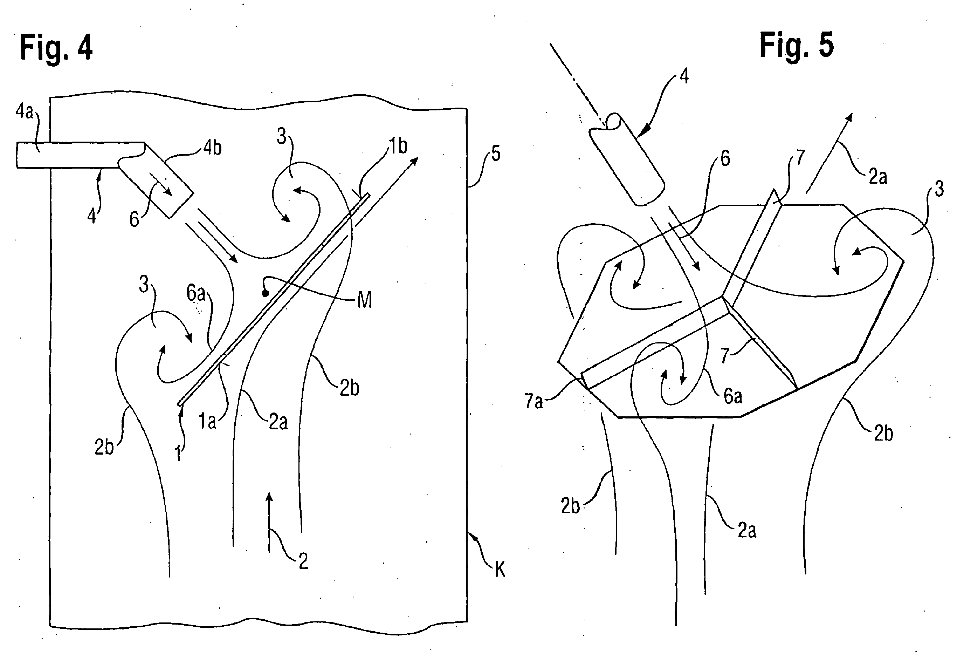

Bei der Ausführungsform der erfindungsgemäßen Vorrichtung gemäß Fig. 4 und 5 durchsetzt ein Zufuhrrohr 4 mit einem geraden Abschnitt 4a die Wandung 5 eines den großen Gasmengenstrom 2 führenden Kanal 5, in dem eine regelmäßig 8-eckige Mischerscheibe 1 geneigt angeordnet ist. (Die 8-Eckform wird bevorzugt).
An den Rohrabschnitt 4a schließ sich ein abgewinkelter Rohrabschnitt 4b an, der senkrecht auf die Mitte M der Lee-Seite 1 b der Mischerscheibe 1 ausrichtet ist.

Der aus dem Rohrabschnitt 4b austretende gasförmige Fluidstrahl 6 prallt auf die Mischerscheibe mit der Mitte M als Staupunkt und wird über die Abströmseite 1 b der Mischerscheibe 1 verteilt wie es durch die Pfeile 6a in der Fig.5 schematisch dargestellt ist. Im Bereich der umlaufenden Kante erfolgt die Einmischung in die Strömungswirbel 3.

In der Fig.5 sind drei jeweils paarweise einen Winkel von 120° einschließende und auf der Abströmseite der Scheibe 1 befestigte Halterungen 7 dargestellt, die sich bis zur Mitte M erstrecken und deren freie Enden 7a mit der Kanalwandung oder mit einem nicht dargestellten Traggerüst verbunden sind. Die Halterungen 7 können sich bis zur Kanalwandung erstrecken und dort verschweißt sein. Da sich die Halterungen radial erstrecken, behindern sie die Strömung in Richtung der Pfeile 6 nicht, sondern unterstützen vielmehr die radiale Ausrichtung der Strömung.

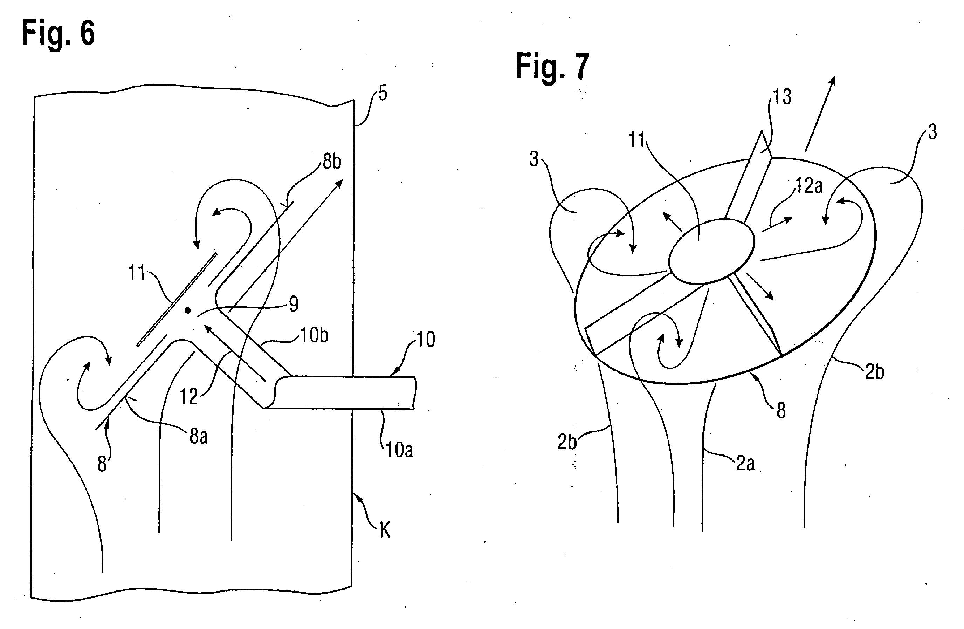

Bei der Ausführungsform der erfindungsgemäßen Vorrichtung gemäß Fig. 6 und 7 ist eine kreisförmige Mischerscheibe 8 mit einer mittigen Öffnung 9 versehen. Ein Zufuhrrohr 10 durchsetzt mit einem geraden Abschnitt 10a die Wandung 5 des den großen Gasmengenstrom 2 führenden Kanals 5. An den Rohrabschnitt 10a schließt sich ein abgewinkelter Rohrabschnitt 10b an, der auf der Luv-Seite 8a der Mischerscheibe 8 senkrecht auf die Öffnung 9 ausrichtet ist und mit der Scheibe verschweißt ist.

Auf der Lee - Seite ist mit Abstand von der Öffnung 9 und über der Öffnung eine Prallplatte 11 angeordnet. Der an der Prallplatte umgelenkte Fluidstrom 12 wird über die Abströmseite verteilt, wie es durch die Pfeile 12a in der Fig.7 schematisch dargestellt ist. Im Bereich der umlaufenden Kante erfolgt die Einmischung in die Strömungswirbel 3.

Da sich die hier vorgesehenen Halterungen 13 ebenfalls radial erstrecken, behindern sie die Strömung in Richtung der Pfeile 12 nicht.

Die Rohre 4 und 10 müssen im Kanal K nicht unbedingt abgewinkelt sein, das gasförmige Fluid muß nur der Mischerscheibe senkrecht zugeführt werden, d.h. eine schräge Rohrdurchführung durch die Kanalwand 5 wäre auch denkbar. Es ist auch denkbar, dass mindestens ein weiterer Rohrabschnitt parallel zur Kanalwandung verläuft.

Es können auch andere radiale Halterungskonfigurationen mit mehr oder weniger als drei Halterungen eingesetzt werden

Es ist selbstverständlich, dass bei großen Kanalquerschnitten mehrere Mischerscheiben mit zugeordneter Fluidzufuhr über den Kanalquerschnitt verteilt in einer oder mehreren Ebenen gestaffelt vorgesehen sein können.

### Bezugszeichenliste

- 1: runde Mischerscheibe
- 1a: Luv - Seite der Scheibe
- 1b: Lee - Seite der Scheibe
- 2: Gasmengenstrom
- 2a: Gasmengenstrom, Teilstrom auf der Luv-Seite 1a der Scheibe
- 2b: Gasmengenstrom, Teilstrom zur Lee - Seite 1 b der Scheibe
- 3: Hufeisenwirbel und Wirbelschleppe
- 3a: Wirbelachse
- 3b: Außengrenze des Wirbels
- 4: Zufuhrrohr
- 4a: gerader Rohrabschnitt
- 4b: abgewinkelter Rohrabschnitt
- 5: Wandung des Rauchgaskanals K
- 6: Fluidstrahl
- 6a: Pfeile der Fluidströmung
- 7: Halterungen
- 7a: freie Enden der Halterungen
- 8: -eckige Mischerscheibe
- 8a: Luv - Seite
- 8b: Lee-Seite
- 9: mittige Öffnung
- 10: Zufuhrrohr
- 10a: gerader Rohrabschnitt
- 10b: abgewinkelter Rohrschnitt
- 11: Prallplatte
- 12: Fluidstrom
- 12a: Pfeile der Fluidströmung
- 13: Halterungen
- K: Rauchgaskanal
- M: Mitte der Scheiben 1,8 bzw. Staupunkt des Prallstrahl

## Patentansprüche

1. Verfahren zum Vermischen mindestens eines gasförmigen Fluidstroms mit einem großen Gasmengenstrom, insbesondere zum Einbringen eines Reduktionsmittels in ein Stickoxide enthaltendes Rauchgas,
bei dem der große Gasmengenstrom mindestens ein unter einem Winkel gegen seine Strömungsrichtung geneigt angeordnetes scheibenartig ausgebildetes Mischerelement, an dem sich schleppenartige Strömungswirbel ausbilden, auf dessen Anströmseite anströmt,
bei dem der Fluidstrom im wesentlichen auf die Mitte einer der Abströmseite des Mischerelements zugeordneten und zum Mischerelement parallelen Prallfläche gelenkt wird
und bei dem der gasförmige Fluidstrom stromab des Mischerelements zugemischt wird, **dadurch gekennzeichnet,**
**dass** der Fluidstrom im wesentlichen senkrecht auf die Mitte der Prallfläche auf der Abströmseite gelenkt wird, wobei das gasförmige Fluid von der Mitte her über die gesamte Abströmseite des Mischerelements verteilt wird und über das gesamte sich an der umlaufenden Kante des Mischerelements ausbildende Wirbelsystem eingetragen wird.

2. Verfahren nach Anspruch 1,
**dadurch gekennzeichnet,**
**dass** Fluidstrom direkt auf die Abströmseite des Mischerelements gelenkt wird.

3. Verfahren nach Anspruch 1,
**dadurch gekennzeichnet,**
**dass** der Fluidstrom von der Anströmseite her durch eine in dem Mischerelement vorgesehene Öffnung auf eine auf der Abströmseite vor der Öffnung angeordnete Prallplatte gelenkt wird.

4. Vorrichtung zum Vermischen mindestens eines gasförmigen Fluidstroms (6;12) mit einem in einem Gaskanal strömenden großen Gasmengenstrom (2), insbesondere zum Einbringen eines Reduktionsmittels in ein Stickoxide enthaltendes Rauchgas, mit mindestens einem in dem Gaskanal gehaltenen scheibenartig ausgebildeten Mischerelement (1;8) mit Anströmseite (1a) und Abströmseite (1 b), das gegen die Strömungsrichtung des Gasmengenstroms unter einem Winkel geneigt angeordnet ist und an dem sich schleppenartige Strömungswirbel (3) ausbilden, einer der Mitte der Abströmseite (1 b) des Mischerelements zugeordneten und zur Mischerscheibe parallelen Prallfläche (1;8;11) und mit einer im wesentlichen auf die Mitte der Prallfläche ausgerichteten rohrartigen Zumischeinrichtung (4;10) für den gasförmigen Fluidstrom, insbesondere zum Einbringen eines Reduktionsmittels (5a) in ein Stickoxide enthaltendes Rauchgas,
**dadurch gekennzeichnet,**
**dass** die Ausströmrichtung (6;12) der rohrartigen Zumischeinrichtung (4;10) im wesentlichen senkrecht auf die Prallfläche (1;8; 11) ausgerichtet ist.

5. Vorrichtung nach Anspruch 4,
**dadurch gekennzeichnet,**
**dass** der Fluidaustritt (4a;6) der Zumischeinrichtung auf der Abströmseite (1b;8b) des Mischerelements angeordnet ist und das Mischerelement selbst als Prallplatte dient.

6. Vorrichtung nach Anspruch 4,
**dadurch gekennzeichnet,**
**dass** der Fluidaustritt (10b;12) der Zumischeinrichtung (10) eine im wesentlichen mittige Öffnung (9) im Mischerelement ist, aus der der Fluidstrom zur Abströmseite (1 a; 8a) hin austritt, und auf der Abströmseite vor der Öffnung in Abstand eine gesonderte Prallplatte (11) angeordnet ist.

7. Vorrichtung nach einem der Ansprüche 4 bis 6,
**dadurch gekennzeichnet,**
**dass** die Mischerscheibe (1) kreisförmig, elliptisch, oval, parabelförmig, rautenförmig, vieleckig oder dreieckförmig ausgebildet ist.

8. Vorrichtung nach Anspruch 7,
**dadurch gekennzeichnet,**
**dass** die Vieleckform eine symmetrisch strukturierte 8-Eckform, insbesondere regelmäßige 8-Eckform, oder eine Trapezform ist.

9. Vorrichtung nach einem der Ansprüche 4 bis 7,
**dadurch gekennzeichnet,**
**dass** die Mischerscheibe (1) unter einem Winkel (α) im Bereich zwischen 30° bis 90° zur Strömungsrichtung des Gasmengenstroms geneigt ist.

10. Vorrichtung nach einem der Ansprüche 4 bis 8,
**dadurch gekennzeichnet,**
**dass** auf der Abströmseite der Mischerscheibe (1; 8) sich radial erstreckende Halterungen (7;13) für die Halterung der Mischerscheibe im Gaskanal (K) angeordnet sind.

## Claims

1. Method of mixing at least one gaseous fluid stream with a large gas stream, especially for introducing a reducing agent into a flue gas containing nitrogen oxides,
with which the large gas stream flows against at least one disk-shaped mixer element on its inflow side, which is disposed at an angle counter to the direction of flow of the large gas stream and at which eddy-type whirls form,
with which the fluid stream is guided to the center of an impact surface, which is associated with the discharge side of the mixer element and is parallel to the mixer element and with which the gaseous fluid stream is admixed downstream the mixer element,
**characterized in that** the fluid stream is guided essentially perpendicularly onto the center of the impact surface on the discharge side, the gaseous fluid being distributed from the center over the entire discharge side of the mixer element and being incorporated across the entire whirl system formed at the peripheral edge of the mixer element.

2. Method according to Claim 1,
**characterized in that** the fluid stream is guided directly onto the discharge side of the mixer element.

3. Method according to Claim 1,
**characterized in that** the fluid stream is guided from the inflow side trough an opening provided in the mixer element onto an impact plate disposed on the discharge side in front of the opening.

4. Apparatus for mixing at least one gaseous fluid stream (6; 12) with a large gas stream (2) that flows in a gas duct, especially for introducing a reducing agent into a flue gas containing nitrogen oxides,
with at least one disk-shaped mixer element (1; 8) held in the gas duct and having an inflow side (1a) and a discharge side (1b), which is disposed at an angle counter to the direction of flow of the gas stream und at which eddy type flow whirls (3) are forming,
an impact surface (1; 8; 11) associated with the center of the discharge side (1 b) of the mixer element and being parallel to the mixer element and with a tubular admixing device (4; 10) for the gaseous fluid stream, especially for introducing a reduction agent into a flue gas containing nitrogen oxides,
**characterized in that** the discharge flow direction (6; 12) of the tubular admixing device (4; 10) is directed essentially perpendicular onto the impact surface (1; 8; 11).

5. An apparatus according to Claim 4,
**characterized in that** the fluid outlet (4a; 6) of the admixing device is arranged on the discharge side (1b; 8b)of the mixer element and the mixer element itself serves as impact plate.

6. An apparatus according to Claim 4,
**characterized in that**,
the fluid outlet (10b; 12) of the admixing device (10) is an essentially centric opening (9) in the mixer element, through which the fluid stream is discharged towards the discharge side (1a; 8a), and on the discharge side a separate impact plate (11) is arranged ahead of the opening at a distance there from.

7. An apparatus according to one of the Claims 4 to 6,
**characterized in that** the mixer disk (1) has a circular, elliptical, oval, parabolic, diamond, polygonal or triangular shape.

8. An apparatus according to Claim 7,
**characterized in that** the polygonal shape is a symmetrically structured 8-cornered shape, in particular regular 8-cornered shape, or a trapezoidal shape.

9. An apparatus according to one of the Claims 4 to 7,
**characterized in that** the mixer disk (1) is inclined at an angle (α) between 30° to 90° relative to the direction of flow of the gas stream.

10. An apparatus according to one of the Claims 4 to 8,
**characterized in that** on the discharge side of the mixer disc (1; 8) radially extending mounting supports (7; 13) for the support of the mixer disc within the gas duct (K) are disposed.

## Revendications

1. Procédé de mélange d'un courant de fluide gazeux à un grand courant quantitatif de gaz passant dans un canal pour du gaz, notamment pour introduire un agent réducteur dans des gaz de fumée contenant des oxydes d'azote,
dans lequel, on fait affluer le grand courant quantitatif de gaz du côté d'afflux d'un élément mélangeur en forme de disque, qui est incliné d'un certain angle par rapport à la direction d'écoulement et sur lequel se forme des tourbillonnements d'écoulement de type en traînée,
dans lequel le courant de fluide est dévié sensiblement sur le milieu d'une surface de rebondissement parallèle à l'élément mélangeur et associée à la face de fuite de l'élément mélangeur,
et dans lequel, le courant de fluide gazeux est ajouté en aval de l'élément mélangeur, **caractérisé**
**en ce que** le courant de fluide est dévié sur la face de fuite sensiblement perpendiculairement au milieu de la surface de rebondissement, le fluide gazeux étant réparti à partir du milieu sur toute la face de fuite de l'élément mélangeur et étant introduit sur tout le système tourbillonnant se formant sur le bord périphérique de l'élément mélangeur.

2. Procédé suivant la revendication 1,
**caractérisé**
**en ce que** le courant de fluide est dévié directement sur la face de fuite de l'élément mélangeur.

3. Procédé suivant la revendication 1,
**caractérisé**
**en ce que** le courant de fluide est dévié à partir de la face de fuite, en passant par une ouverture prévue dans l'élément mélangeur, sur une plaque de rebondissement disposée sur la face de fuite devant l'ouverture.

4. Dispositif de mélange d'au moins un courant (6 ; 12) de fluide gazeux à un grand courant (2) quantitatif gazeux passant dans un canal pour du gaz, notamment pour introduire un agent réducteur dans des gaz de fumée contenant des oxydes d'azote, comprenant au moins un élément (1 ; 8) mélangeur en forme de disque, qui est maintenu dans le canal pour du gaz, qui a une face (1a) d'afflux et une face (1b) de fuite, qui est incliné d'un certain angle par rapport à la direction d'écoulement du courant quantitatif de gaz et sur lequel se forment des tourbillonnements (3) du courant du type en traînée, une surface (1 ; 8 ; 11) de rebondissement parallèle au disque mélangeur et associée au milieu de la face (1 b) de fuite de l'élément mélangeur et un dispositif (4 ; 10) tubulaire d'addition du fluide gazeux, qui est dirigé sensiblement sur le milieu de la surface de rebondissement, notamment pour introduire un agent (5a) réducteur dans des gaz de fumée contenant des oxydes d'azote,
**caractérisé**
**en ce que** la direction (6 ; 12) de sortie du dispositif (4 ; 10) tubulaire d'addition est sensiblement perpendiculaire à la surface (1 ; 8 ; 11) de rebondissement.

5. Dispositif suivant la revendication 4,
**caractérisé**
**en ce que** la sortie (4a ; 6) du fluide du dispositif d'addition est disposée sur la face (1 b ; 10) de fuite de l'élément mélangeur et en ce que l'élément mélangeur soi-même sert de plaque de rebondissement.

6. Dispositif suivant la revendication 4,
**caractérisé**
**en ce que** la sortie (10b ; 12) de fluide du dispositif (10) d'addition est une ouverture (9) sensiblement au milieu de l'élément mélangeur, de laquelle le courant de fluide sort en allant vers la face (1a ; 8a) de fuite et une plaque (11) de rebondissement distincte est disposée sur la face de fuite devant l'ouverture en en étant à distance.

7. Dispositif suivant l'une des revendications 4 à 6,
**caractérisé**
**en ce que** le disque (1) mélangeur est circulaire, elliptique, ovale, parabolique, en forme de losange ou de polygone, ou triangulaire.

8. Dispositif suivant la revendication 7,
**caractérisé**
**en ce que** la forme polygonale est une forme octogonale symétrique, notamment une forme octogonale régulière ou une forme trapézoïdale.

9. Dispositif suivant l'une des revendications 4 à 7,
**caractérisé**
**en ce que** le disque (1) mélangeur est incliné d'un angle (α) compris entre 30° et 90° par rapport à la direction d'écoulement du courant massique de gaz.

10. Dispositif suivant l'une des revendications 4 à 8,
**caractérisé**
**en ce que** des fixations (7 ; 13) s'étendant radialement sont disposées sur la face de fuite du disque (1 ; 8) mélangeur pour la fixation du disque mélangeur dans le canal (K) pour du gaz.
